# EUROPEAN PATENT APPLICATION

(11) **EP 2 537 798 A1**
(43) Date of publication of application: **26.12.2012**
(21) Application number: 11005058.0
(22) Date of filing: 21.06.2011
(51) Int. Cl.: B82Y 30/00, B82Y 40/00

(54) **Method for the generation of nanoparticle composite films and films made using such a method**

(71) Applicant: ETH Zurich, 8092 Zürich (CH)
(72) Inventor: Pratsinis, Sotiris E., 8032 Zürich (CH); Sotiriou, Georgios, 8057 Zürich (CH); Blattmann, Christoph O., 8805 Richterswil (CH)

(57) **Abstract**

Proposed is a method for the production of at least one composite layer (7) in which nanoparticles are embedded in a polymer matrix, comprising the following steps: 1. in situ production and aerosol deposition of nano-particles onto a substrate (1) for the formation of a particle film (2) on the substrate (1); 2. immersing said particle film (2) with a polymer solution or a liquid polymer precursor material for the formation of the composite layer (7).

## Description

### TECHNICAL FIELD

The present invention relates to methods for the generation of nanoparticle composite films and films made using such a method as well as to uses thereof.

### PRIOR ART

Composite materials have become of great interest, due to the great properties, which can be induced into the resulting material. In brief wording, a composite is a mixture of a matrix material and a filling material. The matrix material can for example be polymer, metal or glass. The filling material is added to enhance or reveal a certain property of the matrix material. Such properties include luminescence, increase in young's modulus, magnetic behavior and thermal stability. Polymer composites in specific are stimulating further research. In this case the polymer is the matrix material. The high interest is on one hand due to the favorable properties of a polymer such as ductility, weight and ease of manufacturing. On the other hand the vast amount of fillers and therefore possibilities to change certain material properties opens a whole range of potential applications.

Polymer composites can be divided into two subgroups: polymer nanocomposites and polymer macrocomposites. The prefixes nano- and macro- characterize the size range of the filler material. In the case of nanocomposites the filler material is in the form of nanoparticles in contrast to macroparticles, which are added to achieve a macrocomposite. An ideal polymer nanocomposite has superior properties over polymer macrocomposite consisting of the same components. This due to the greater specific surface area and therefore also greater available particle-polymer interaction area. As the tendency for miniaturization continues, one must ensure that the utilized materials also reveal a homogeneous property over the whole nano-scale structure. In the case of macrocomposites one can say the resulting material is an inhomogeneous material mixture. On the other hand nanoparticles embedded in a polymer matrix allow the two property sets, that of the polymer and that of the particles, to ideally remain merged also for nano-scale structures.

However there remains a major challenge in the production of polymer nanocomposites. As mentioned the ideal case has a single homogeneous property set over the whole material. Because the nanoparticles tend to agglomerate the resulting composite reveals unwanted particle islands. This causes the creation of inhomogeneous properties throughout the material. Different methods have been investigated to overcome this problem. One approach applied in solvent-melt blending and in-situ polymerization is the use of surfactants or by adding functional groups to the surface of the nanoparticles. The nanoparticles and polymer exert less repelling forces against each other due to the 'binding' coating on the particle's surface. However this requires addition chemicals and/or processing steps. A different approach can be utilized by applying layer-by-layer adsorption (so called LbL deposition). Polymer and nanoparticles are adsorbed by electrostatic forces by immersing the probe into corresponding solutions. The nanoparticles therefore distribute themselves evenly over the surface at the cost of multiple processing steps and many repetitions to create composite films of a certain thickness.

Alternatively a polymer solution with dispersed nano.particles can be deposited in a spin coating process in a so called spin assisted layer by layer deposition (SA LbL).

Another method that has overcome the problem of agglomeration is the vapor phase codeposition technique. By allowing a monomer gas to simultaneously deposit onto a substrate as metal atoms nucleate on its surface, a fine distribution of nanoparticles with a high filling ratio is achievable. The method has draw-backs due to the strong dependence of particle size and filler ratio on one another and because not all polymers are applicable. Except for vapor phase co-depositing, all other methods require a separate and preceding production of nanoparticles. One can differentiate between wet and dry synthesis. Dry synthesis methods allow one to use the nanoparticles with high purity directly after synthesis without additionally having to separate them from a solution. In particular the flame-spray pyrolysis (FSP) production method is very competitive due to the ease with which one can regulate the particle properties and the good scalability. A further advantageous property, which one can utilize from FSP, is the possibility of directly depositing particles to create a particle film with a high porosity.

Ferromagnetic materials exhibit a special change in magnetic behavior when in the form of nanoparticles. It is referred to as superparamagnetism. Instead of revealing a magnetization hysteresis curve, superparamagnetic nanoparticles only show a high saturation magnetization without any remanence. That means these particles are strongly stimulated by a magnetic field, but as soon as the external magnetic field has been removed, they show no more magnetization. This is a phenomenon due to particle size and temperature. Exceeding the critical diameter or falling below the blocking temperature disables the superparamagnetic behavior to show up.

So polymer nanocomposite materials are advantageous because they combine the desired properties of the polymer and the functionality of the filler. Several methods have been employed for synthesis of sophisticated polymer nanocomposites for magnetic actuators, dichroic films, luminescent polymers, to name a few. In most methods, the dispersion of filler particles within the polymer matrix cannot be easily achieved. Therefore, often an extra process step is performed for surface modification of the filler material. Even then, however, it is challenging to achieve nanocomposites with high (>5 vol%) filler content and homogeneous filler distribution or dispersion.

### SUMMARY OF THE INVENTION

Here, a novel and versatile method is proposed so polymer nanocomposites are made having high content of nanofiller homogeneously dispersed. The process comprises two steps: first the nanofiller material is produced and directly deposited on a substrate and optionally stabilized in-situ (e.g. flame annealing), and second a polymer solution is spin-coated on the as-deposited filler film. The initial mechanical stabilization of the filler film is often important, as it helps retain its structure and not to collapse during spin-coating of the polymer solution. The process allows for a precise control over the filler-content and morphology in the nanocomposite by adjusting the filler deposition time and the polymer solution spin-coating speed. Additionally, synthesis of multi-layered and even multicomposite nanocomposites is also possible, by repeating the process numerous times at various filler and polymer compositions in a Layer-by-Layer (LbL) deposition process. One could say that the proposal is a direct flame and spin assisted Layer-by-Layer deposition process (FSA LbL).

Multilayer nanocomposite polymeric films with high content of inorganic nanoparticles (nanofillers) can thus be made by aerosol filler generation and deposition followed by immediate spin coating of a polymer solution. The thickness of the filler film can be controlled by the deposition time while its adhesion, cohesion and structure optionally by in-situ annealing. Filler particles can be even partially immersed in the polymer matrix by controlling the spin-coating. Synthesis of multilayered and even multicomposite films can be achieved by repeating the process at selected filler and polymer compositions (LbL). Free-standing nano-composite microstructures (e.g. cantilever-like) can be made by depositing the polymer nanocomposite films on a sacrificial layer. The filler film stays intact after polymer addition, resulting in high-filler content nanocomposites with homogeneous filler distribution or dispersion in the polymer as demonstrated by optical microscopy. Such nanocomposite films can be attractive for their antireflective properties, limited gas permeability, superparamagnetic performance, dielectric behavior, antiseptic properties, antifogging, hydrophobic or hydrophilic performance, mechanic behavior, dental prosthetics and hygiene, optics, luminescence, phosphorescence etc. by judicious selection of filler and polymer composition as well as the filler film structure by the above process. As an example given further below, multilayer polymethylmethacrylate films containing superparamagnetic filler nanoparticles were made that exhibit superparamagnetic behavior and their magnetic actuation is demonstrated.

More generally, this invention thus proposes a method for the production of at least one composite layer in which nanoparticles are embedded in a polymer matrix, comprising the following steps:
1. in situ production and aerosol deposition of nano-particles onto a substrate for the formation of a particle film on the second substrate;
2. immersing said particle film with a polymer solution or a liquid polymer precursor material for the formation of the composite layer.

According to a first preferred embodiment, in step 1 flame aerosol technology, e.g. flame spray pyrolysis, is used for the generation of the nano-particles and the substrate is placed in the flow path of the flame, preferably at a distance in the range of 10-30 cm, preferably in the range of 15-25 cm, for the formation of the particle film.

According to yet another preferred embodiment, step 1. is carried out for a timespan in the range of 5-150 seconds, preferably in the range of 30-120 seconds.

Optionally, between step 1. and step 2. an annealing step can be carried out, preferably by subjecting the particle film to an elevated temperature, in particular by subjecting it to a flame treatment, preferably during a timespan of 5-120 seconds, preferably in the range of 20-40 seconds.

Prior to step 1. is possible to apply a polymer layer (like a glue) to the free surface of the substrate, for example in a spin coating process using a polymer solution or a liquid polymer precursor material.

In step 2. the polymer solution can be applied in a coating process selected from the group of spin coating, cast coating, slot coating, spray coating, dip coating, preferably it is applied using spin coating.

The substrate, onto which the layer(s) can be directly deposited, can be a polymeric or ceramic substrate, which can be coated or uncoated. It can e.g. be a glass substrate, a metal substrate, a silicon substrate such as a silicon wafer, or a combination thereof.

It is also possible, in order to generate a pattern of the layer of nanoparticles within step 1, to use a mask between the source of nanoparticles, for example the flame, and the surface of the substrate so that the generation of the particle film is limited to specific areas by this mask.

Yet another preferred embodiment of the method is characterised in that during step 1. the substrate is oriented such that the surface onto which the particle film is to be deposited is oriented essentially horizontally and downwards, and wherein during step 2 the substrate is oriented such that the surface onto which the polymer solution or polymer precursor material is to be applied onto the particle film is oriented essentially horizontally and upwards.

Further preferably steps 1. and 2. can be repeated at least once for the formation of a multilayer composite layer wherein preferably the steps are repeated at least twice or three times. It is for example also possible to generate multilayer structures with up to 100 or 200 individual layers.

During step 1. the substrate (1) and/or a substrate holder holding the substrate can be cooled, preferably watercooled.

After steps 1. and 2., preferably repeated at least once for the formation of a multilayer composite layer, preferably repeated at least twice or three times, the composite layer is removed from the substrate.

The nanoparticles typically have an average size in the range of 1-100 nm, preferably in the range of 3-50 nm.

Preferably the nanoparticles are selected from the group consisting of: inorganic (ceramic or metal) particles, silica particles, preferably fumed silica particles, titania particles, carbon black particles, silver particles, gold particles, magnetically active particles, superparamagnetic active particles, in particular superparamagnetic iron oxide particles, optically active particles, electro-optically active particles, dielectric particles, thermally conductive particles, or combinations or coated particles thereof.

Furthermore the present invention relates to a particular composite layer, preferably multilayer composite layer, preferably made or obtainable using a method as outlined above.

Individual layers of such a composite layer typically have a thickness of less than 100 µm, typically even less than 2 µm, preferably less than 1 µm, preferably in the range of 50-100 nm. In case of a multilayer composite layer the thickness is a corresponding multiple thereof.

Such a multilayer composite layer can be in the form of a self-supporting structure, for example to function as a cantilever.

Typically such a composite layer can be generated with a very high homogeneity of nanoparticles and with a high content of nanoparticles. Preferably therefore the content of nanoparticles in the composite layer is in the range of 5-60 volume percent, preferably in the range of 8-40 volume percent, particularly preferably in the range of 10-25 volume percent.

Last but not least the present invention relates to the use of such a composite layer, as an antireflective element, as a limited gas permeability element, as a superparamagnetic element, as a dielectric element, as an anti-septic and antibacterial and antifungal element, as an anti-fogging element, as a hydrophobic element, as a hydrophilic element, as a medical element, as an optical element, as it in any element.

Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: schematically depicts the basic elements of the proposed method;
- Fig. 2: shows XRD spectra of nanoparticles collected on the filter (a), 10 scratched- off particle films exposed for 30s each (b), substrate exposed for 5 minutes (c), remains from TG analysis of 5 single layer nanocomposite films without annealing (d) and remains from TG analysis from one single layer nanocomposite film with annealing (e);
- Fig. 3: shows the thickness-time correlation computed by from the average weight of particle films created for different depositing durations (linear function). The average mass of the particle films is represented by the diamonds. The circles show the actually measured film thickness from SEM images;
- Fig. 4: shows a SEM image of a particle film on a glass substrate (depositing time: 60s) viewed from the top (left) and the side (right). Thickness measurements correspond very well with the calculated linear interpolation curve;
- Fig. 5: shows a SEM image of a particle film deposited onto a PMMA coated silicon substrate for 180s and annealed for 30s at 14cm. The film compaction as well as the possibility for depositing and annealing particles directly onto a PMMA layer can be taken out of the image;
- Fig. 6: shows light microscope images (50x magnification) of a pure particle film (left) and a corresponding polymer nanocomposite film (right). In either case particles were deposited for 30s and no annealing was applied. A slight increase, but nevertheless very homogeneous texture can be noticed in the composite when compared to the particle film;
- Fig. 7: shows SEM images and the possibility of creating multi-layer films. a) and b) solely differ in the amount of layers: 3 and 10 respectively. Image c) reveals a 3-layer film with a reduction in particle depositing time per layer to 10s from 30s applied in film a);
- Fig. 8: shows light microscope images of the 3-layer particle film at 20x (left) and 100x (right) magnification. The particle distribution in the plane shows to be very homogeneous;
- Fig. 9: shows a SEM (a) and optical microscopy image (d) of a 3-layer polymer nanocomposite with superparamagnetic fillers made by flame direct deposition without mechanical stabilization and subsequent polymer solution spin-coating. (b,e) A single-layer polymer nanocomposite made as above but with mechanical stabilization by in-situ annealing. (c,f) A 3-layer polymer nanocomposite with mechanically stable filler films;
- Fig. 10: shows the weight loss of the 3-layer polymer nanocomposite film as a function of temperature. A filler ratio of 21.5wt% could be measured;

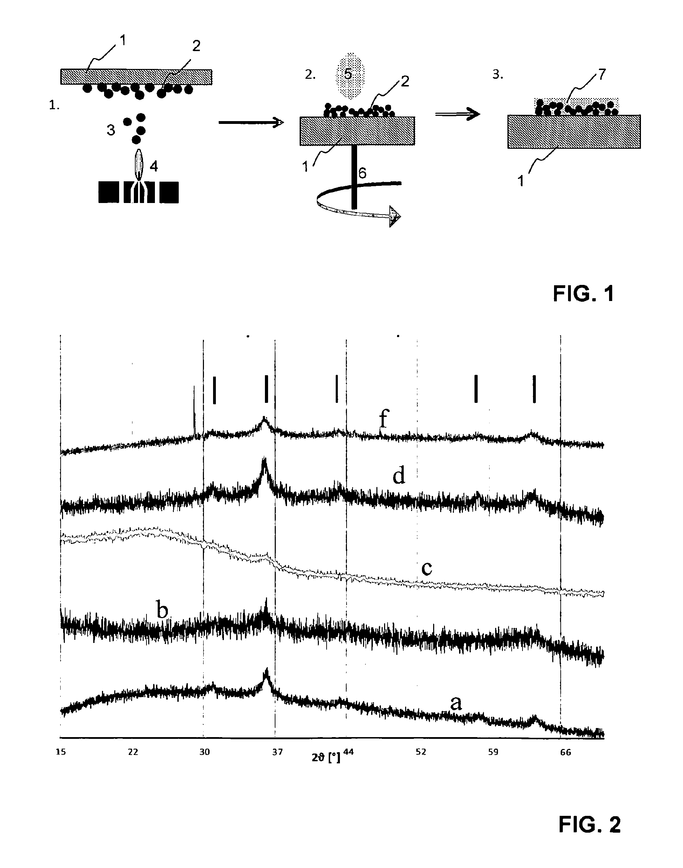

- Fig. 1 1: shows the magnetic hysteresis of polymer nanocomposites with 3-layers of not mechanically stabilized filler film (a) and of a single layer filler film mechanically stabilized (b);

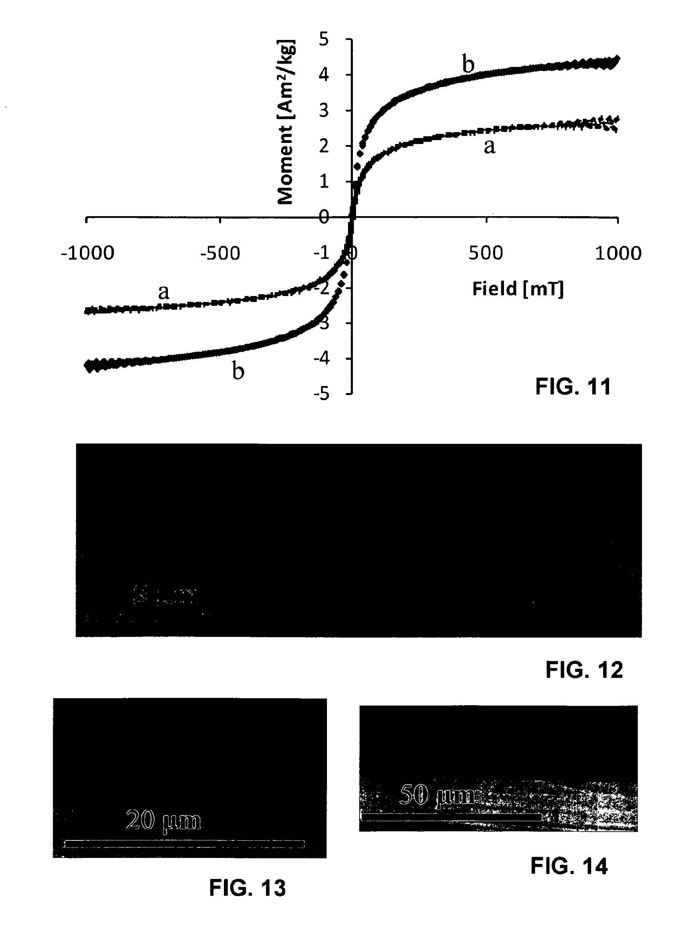

- Fig. 12: shows a BSE image of a polymer nanocomposite film containing a particle film deposited for 30s and subsequently annealed for 30s at 20cm above the nozzle with a xylenes flow rate of 6ml/min;
- Fig. 13: shows a SEM image of a nanocomposite film which contains an annealed particle film (particle depositing time: 120s; xylenes flow rate: 12m1/min; annealing height: 20cm);
- Fig. 14: shows a SEM image of three annealed composite films deposited one on top of the other. Each layer was created with a depositing time of 120s and 30s of annealing at 20cm with the higher xylenes flow rate; and

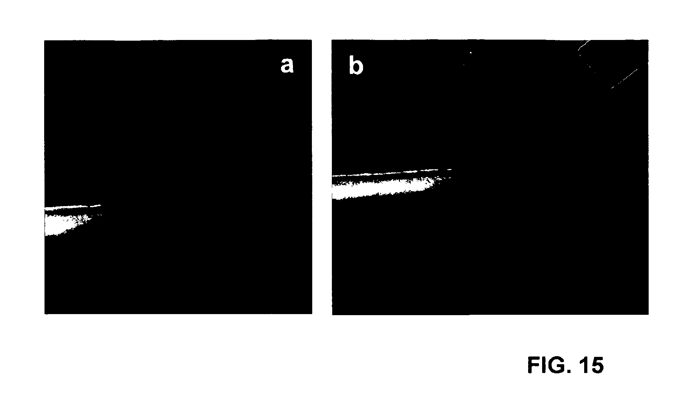

- Fig 15: shows images of the resulting 3-layer polymer nanocomposite film (thickness of 4 um) at rest (a) and actuated by a permanent magnet (b).

### DESCRIPTION OF PREFERRED EMBODIMENTS

Figure 1 schematically shows the steps of the proposed method for making a nano-composite film. In a first step 1. a substrate 1, which is preferably watercooled either directly or via a watercooled holder, is flipped upside down so that the surface to be coated shows downwards. The substrate can also be a sacrificial substrate and/or a polymer material. Beneath this substrate 1 a flame 4 is fed with precursor solution comprising the starting material for the nanoparticles to be generated such that the flame generates nanoparticles or aerosol containing nanoparticles 3 which impinge and attach onto the bottom surface of the substrate 1 forming there a particle layer 2. This particle layer 2 can now (not displayed in figure 1) optionally be annealed by subjecting it for example to a flame which is not generating particles.

In the following step designated with 2. the substrate is flipped such that the particle layer 2 shows upside. A drop 5 of polymer solution is applied from the top and the substrate 1 is rotated around axis 6 such that a spin coating process takes place and the polymer solution immerses/impregnates/coats the layer 2. The solvent of the polymer solution is allowed to evaporate such that the nano-composite film 7 forms.

The steps illustrated in figure 2 can be repeated as many times as layers are desired in a layer by layer (LbL) production process. Different nanoparticles or mixtures of different nanoparticles can be embedded in different layers. Also the thickness of the individual layers can be controlled by on the one hand the deposition time, the precursor feed rate, the distance to the flame etc during step 1., but also by the amount of polymer solution 5 applied in step 2. It is also possible to apply only as little polymer solution such that after the evaporation at least a fraction of the particles forming layer 2 at least partly extend above the surface of the polymer layer, this can for example be useful for the generation of particular surface effects.

The combination of polymer nanocomposites in the form of thin films and superparamagnetic material is the basis of this section. The interest in such polymer nanocomposite films comes from the multitude of applications, where their incorporation is possible: Sensors, actuators such as cantilevers, lab-on-a-chip and electromagnetic interference shields. The key idea is thus demonstrated by making superparamagnetic nanocomposite films. So nanosized (dₚ = 10 nm) superparamagnetic iron oxide (filler) nanoparticles were deposited on polymer-coated glass or silicon substrates by flame aerosol deposition. The resulting filler film was in-situ annealed and mechanically stabilized. Its thickness was controlled by adjusting the deposition time. The final polymer nanocomposite was made by spin-coating the polymer solution (PMMA in anisole, 10 wt%) and its thickness was adjusted by the spinning speed. The solvent was then let to evaporate, leaving behind a thin polymer film. Multi-layered films were made by repeating the above process.

### Experimental section:

This following experimental section deals with the evaluation of a new method for the production of polymer nanocomposites. A first specification set was that the resulting polymer nanocomposite be a combination of poly(methyl methacrylate) (PMMA) as the matrix material and maghemite nanoparticles (iron oxide present in the form of γ-Fe₂O₃). The resulting structure of the composite was desired to be a thin film of variable thickness, but in the range of 3µm. As a result of the embedding of γ-Fe₂O₃ in the form of nanoparticles, the resulting film was to show superparamagnetic behavior. This constraint was the main functionality that was to be induced by the nanoparticle incorporation.

Furthermore, a production method is demonstrated to achieve an ideal nanocomposite, i.e. with no, or only very little amounts, of agglomeration. The nanoparticles were to remain homogeneously dispersed within the polymer matrix. To make the resulting production method even more competitive towards existing methods, the low agglomeration was to be combined with particle weight fractions, or also referred to as filler ratios, higher than what has been previously achieved.

The last and most important constraint, which was set, was that this method should be fast, reliable, reproducible and scalable. Only through these last constraints can one ensure that this production method does not remain in the labs, but rather be applied by future industries.

### Flame-spray pyrolysis:

The particle production method of flame-spray pyrolysis (FSP) is fast, reliable and scalable, and was used for the production of γ-Fe₂O₃ with a particle diameter of 10nm.

The precursor used was 0.34M solution of iron (III) acetylacetonate (Fe(III)-acac, Fluka, >97%) in a solvent consisting of a 3:1 ratio of xylenes (Sigma Aldrich) and Acetonitrile (Sigma Aldrich, >99.5%, H2O <0.1%). All components were added to a clean container and mixed by a magnetic stirrer until full dissolution.

For the particle production a syringe was filled with the precursor solution. It was then installed into a syringe pump (Inotech) to ensure a constant precursor feed rate of 5ml/min through a capillary while being dispersed by oxygen (02, PanGas, 3.5) flowing at 5L/min. This will further on be referred to as a {5/5} feeding rate. The precursor was ignited by a methane flame at the nozzle. Methane (CH4, PanGas, 2.5) and oxygen were fed at a rate of 1.5L/min and 3.2L/min respectively. Oxygen sheath gas was supplied at a rate of 5L/min. All these feed-rates were regulated by a Bronkhorst HI-TEC (E-7100-DDD). Above the flame a flame hood attached to a vacuum pump funneled the gas and particles through a glass microfiber filter (Whatman, ∅257mm). Particles remained deposited on the filter and could be collected after particle production.

Throughout the whole FSP process the nozzle and capillary were water cooled at a constant rate of 5ml/min while the flame hood was cooled with a water flow rate of circa 40ml/min.

### Film deposition:

To create particle films on a substrate, a copper substrate holder was placed 20cm directly above the nozzle. The substrate holder was water cooled at a constant rate of 40ml/min. The applied substrate was either a glass cover slide (Marienfeld, Nr.1, 20x20mm), glass slide (∼15×25×0.5mm) or a silicon wafer (15×23×0.5mm) but can be extended to any solid material such as polymers. All were cleaned prior to use with ethanol (EtOH, Alcosuisse, 3, II), precision wipes (Kimtech Science) and pressure air. The substrate was clamped onto the substrate holder by a copper mask (1mm thickness) exposing the substrate through a rectangular opening with the dimensions of 16 x 20mm.

The under regular conditions exposed substrate portion was kept covered by a steel shield until the particle flame had reached a steady-state condition after flame ignition. The shield was manually removed and reinserted to allow a particle deposition onto the substrate only for a certain duration measured with a stop watch.

### Optional In-situ flame annealing

In-situ flame annealing was done following the particle film deposition. The substrate height above the nozzle was adjusted to the desired value. The precursor was changed in this process step to 100% xylenes with no additives. The syringe with pure xylenes was inserted into the syringe pump. The feed rate of the xylene was either set to 6ml/min to 12m1/min. Also here the substrate with particle film was kept covered with a steel shield until the flame had reached a steady state condition. The shield was removed for a duration between 10 and 30s to allow the annealing to take place. All gas and cooling water flow rates were kept at the predefined values for the film deposition.

### Spin-coating:

To create the nanocomposites the particle films deposited onto the substrates (with and without annealing) directly subsequently underwent the process of spin-coating. Here the probe was placed into a spin-coater (Laurell WS-650MZ-23NPP/LITE) so that it was centered on the rotation head. Poly(methyl methacrylate) (PMMA, Sigma-Aldrich) dissolved in anisole (Fluka Analytical, >99%) at a concentration of 10wt.% was applied as spin-coating substance. An amount of 0.2ml was slowly and carefully deposited by pipette onto the particle film prior to rotation initiation. The spin-coater was then turned on to reach 500rpm in the first 5 seconds with an acceleration of +100rpm/s. Following the spin-coater accelerated with +1000rpm/s to the maximal rotational speed, which was kept for 45s. The spin-coater then came to a halt. The maximum rotational speed was varied between 1000rpm and 4850rpm.

Following spin-coating the substrate was placed onto a hot plate (VWR VHP-C7) heated to 185°C for circa 2 minutes. This step allowed the full evaporation of the still present anisole and therefore resulted in the firm embedment of the particles into the PMMA matrix.

### Particle characterization:

### X-ray diffraction analysis:

Particles collected on the filter were used for one to do XRD analysis in order to determine composition, phase and crystal size of the produced nanoparticle powder. Small amounts of powder were placed onto an XRD dish so that the covering was set level with the dish surface. After placing the prepared dish into the XRD (Bruker axs D8 advance) the diffraction angles from 2θ equal to 15° to 70° were scanned with a measurement interval distance of 0.03°.

### BET (Brunauer-Emmett-Teller) analysis:

The specific surface area (SSA) of the particle powder was measured by BET-nitrogen adsorption. To do this a defined amount (circa 100mg) of particle powder was filled into a glass tube. The powder was then thoroughly flushed with a nitrogen gas stream (PanGas 5.0) in a Micromeritics Flow Prep 060 at 150°C. Duration of this step was set to 1 hour in order to allow the particles to be cleaned of adhering gas molecules other than N2. The measurement was done at 77K (liquid nitrogen) assuming a sample density of 1g/cm3.

### Magnetization analysis:

The magnetization analysis was done in a MicroMag 3900 VSM (vibrating sample magnetometer) at 300K. For this analysis a defined amount of powder was placed into the destined powder holders. The measurement was done so, that an external magnetic field was exerted upon the probe ranging from +1T to -1T. The degree of magnetization of the probe was measured after each increments of 10mT to result in the classical H-B diagram.

### Film characterization:

### Light microscopy:

To analyze the distribution of the nanoparticles in the particle films as well as the nanocomposites, the film was viewed with a light microscope (ZEISS AXIO Imager.M2m). Optical magnifications of 10, 20, 50 and 100 were used to view different levels of homogeneity. Due to the transparency of glass substrate slides and if also present the PMMA the microscope was set to transmission light. In the case of opaque silicon substrate, reflected light was utilized.

### Scanning electron microscopy (SEM):

This analysis was done with either a FEI Quanta 200 FEG at 40Pa or with a Hitach TM-1000 Table microscope at low vacuum. The former was used in the SE-mode at 5kV to determine the optical structure as well as at 10kV in the BSE-mode to verify the presents of key elements. The Hitach TM-1000 was solely used in the SE mode to determine the structure and dimensions of the film or nanocomposite.

The probes were analyzed from the top looking perpendicular onto the film and/or from the side to determine the vertical film structure not at all visible with a light microscope. To receive relevant structure information of the film's vertical dimension, the probe was divided in half. The fractured and therefore newly exposed side was viewed in the SEM analysis over the whole fracture length.

### Thermogravimetric analysis (TGA) and mass spectrometry (MS):

This analysis was only done with nanocomposites to determine the mass fraction of the embedded iron oxide. A crucible was filled with a defined amount of probe. It was then placed into a Netzsch Jupiter STA 449 C to measure the weight loss while linearly increasing the temperature from 20 to 650°C at a rate of +10°C/min. The initially pure argon atmosphere (PanGas 5.0) was constantly renewed with argon throughout the analysis duration. The gas created by the controlled burning of the nanocomposite was channeled through a mass spectrometer (Netzsch Aëolos QMS 403 C). This allowed one to see which gases were present at which stages of the burning process.

Different methods were applied to place polymer nanocomposite material into the destined crucible. The first method utilized was to scratch the composite from the substrate with a razor blade and funnel it into the crucible. The second method required that one create the nanocomposite on a glass substrate covered with a sacrificial layer (LOR, 1.5µm). By placing the whole probe into a sodium hydroxide bath the sacrificial layer was dissolved. This in return, fully removed the film from the substrate. After rinsing the removed composite film with EtOH and deionized water. The very fragile and flexible film was placed into the crucible and dried. Drying took place in a vacuum-oven (Salvis LAB) at 70°C, 25mbar (±10mbar) for 1.5 hours. To determine the nanocomposite weight, the crucible was weighed before filling and after drying.

### X-ray diffraction (XRD):

The particle composition and size of the nanocomposites was again determined by XRD as in the case of the pure particles mentioned above. Here for the remaining polymer-free material after the TG analysis was utilized.

### Magnetization analysis:

The film was released from the substrate as described above and placed into the magnetization probe container. The same further procedure was applied as for the pure particle powder described above.

### Solvent-melt blending:

Evaluation of the applied method with a commonly used approach was done by creating films by solvent-melt blending. A 10wt% and 15wt% nanocomposite film was created by this method. To do this the weighed amount of iron oxide nanoparticles collected from the filter after FSP were mixed with anisole and a surfactant (3-(trimethoxysilyl)propyl methacrylate, MEMO, Fluka, >98%). The amount of surfactant added was set to 8 molecules of MEMO per nm2 of the iron oxide nanoparticle surface area. The area of the nanoparticles was calculated by utilizing the specific surface area measured in the BET analysis. Mixing of the particles, anisole and MEMO was done by sonication (Merck Sonics Vibra Cell) for 10 minutes with 0.5s interval between 0.5s sonication pulses. A flat tip with 70% maximum intensity was used.

The sonicated solution was then mixed with a prepared solution of PMMA in anisole to result in a 1.10wt% and 1.73wt% iron oxide in PMMA-Anisole solution for the later on 10wt% and 15wt% polymer nanocomposite respectively. This solution was further processed by spin-coating as described in section 2.4 to create the thin films.

### Results:

### Nanoparticles:

The XRD analysis gave forth diffraction spectra, which have a correlation with the desired maghemite. The spectra are depicted in Figure 2. The first particle analysis with XRD was done by just collecting the particles deposited on the glass fiber filter (Figure 1 (a)). One can clearly see the major peaks, which correspond to that of maghemite. Furthermore software evaluation with Topaz 4 calculated the particle diameter to be 8.8nm.

The particles in spectrum (a) were collected on the filter, which is further downstream than where the substrate holder is located. In the present case the relevant particle properties are of those deposited at substrate height. This gave reason to find methods to evaluate these more relevant compositions and sizes. Figure 1 (b) shows, where 10 glass slides were exposed to the particle flame for 30s each. Subsequently the scratched-off particle films were used for this analysis purpose. One can see a slight peak around the characteristic 36° and 63° for maghemite. Also Figure 1 (c), which is a glass substrate exposed for 5 minutes to the particle flame, reveals a spectrum. Material remains were available after TG analysis of 5 single layer nanocomposite films, which were not exposed to an annealing flame. Depositing time of the particles was 30s for each of the 5 polymer nanocomposites. The remaining material was assumed to be the once embedded iron oxide nanoparticles and was therefore utilized for the XRD analysis. The achieved spectrum is visible in Figure 1 (d). One can clearly see the major peaks correlating to maghemite. With Topaz 4 it was also possible to correlate a particle diameter to the achieved spectrum. It was calculated to be 8.7nm. This value is in correlation with the 8.8nm particle diameter calculated from the nanoparticles deposited on the filter.

A very similar case revealed a diffraction spectrum as the one visible in Figure 1 (e). Here the nanocomposite contained a particle film initially deposited for 120s and annealed for 30s at 20cm above the nozzle. This polymer nanocomposite was again used for TG analysis. The remnants could be used for XRD measurements. Also this spectrum shows a good correlation with maghemite. Also to this spectrum Topaz 4 was able to correlate a particle diameter, which achieved a value of 9.5nm. This value is slightly higher than the 8.7 and 8.8nm calculated earlier.

BET measurements could only be done to the particles deposited on the filter. An SSA equal to 115.4m2/g was measured. When assuming spherical particles with the density of γ-Fe2O3, one can calculate a particle diameter of 9.9nm.

The results achieved from the magnetization analysis of the pure particle powder show that no magnetization hysteresis is present. That means as soon as the external magnetic field is removed, the nanoparticles do not reveal any remaining magnetization or remanence. This is a characteristic of γ-Fe2O3, when it is in the form of nanoparticles. The saturation magnetization achieved with these particles is about 36.6 (emu)/g ( (emu/g) = (A m2/kg)). If this value is linked with the 9nm particle diameter and the measurement temperature of 300K, one can once again confirm the values. In literature maghemite very similar in size, 13nm, was synthesized by FSP and achieved a saturation magnetization around 40 (emu/g).

### Particle film:

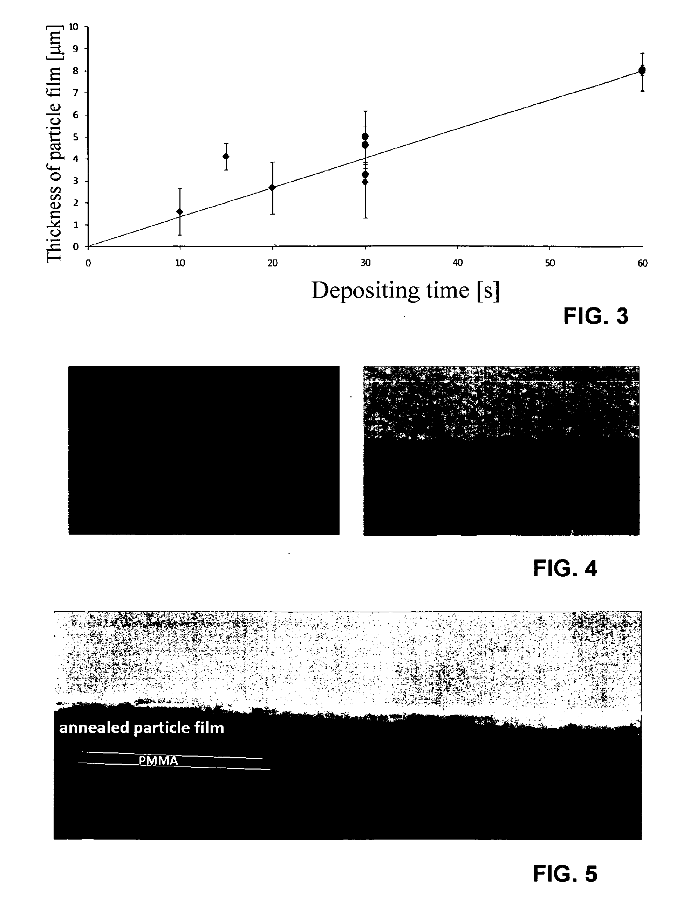

Varying the duration for which a substrate was exposed to the particle flame resulted directly in the total amount of deposited particles. Therefore as expected the particle film mass increased with depositing duration. The interest in this correlation was not the mass itself, but rather the possibility for computing a correlation between film thickness and depositing time. Particles directly deposited by FSP reveal a high porosity of -98%. The remaining 2vol% is the volume of particles with a density in the current project of maghemite. Due to the clearly defined depositing area and the porosity assumption, the thickness-time correlation visible in Figure 3 could be constructed. To verify the thickness correlation SEM images of pure particle films were analyzed. The measured thicknesses can be seen in Figure 3 represented as circles. The computed linear correlation shows a good correspondence with the measured values from the images. In Figure 4 one can see the porous structure of a particle film developed with a depositing time of 60s onto a glass substrate.

The investigations with in-situ flame annealing were done with a xylenes flow rate of 6m1/min for heights ranging from 14 to 20cm above the nozzle. Also the duration was varied from 10s to 30s. No film compacting had taken place. Further annealing was done on silicon substrates.

To achieve the film compacting effect of annealing, the xylenes was fed into the flame at 12m1/min. This was optically visible during the process because of the increase in flame height. Additionally the annealing duration parameter was set fixed at 30s. In this case it was visible, that the film had decreased in porosity. The film thicknesses at different annealing heights were too similar to result in the expected trend of thinner films for closer annealing. A particle film deposited for 180s would result in a thickness of 24.0µm, when applying the linear correlation from Figure 3. After annealing, the film thickness was measured by SEM images to be 2.4µm (Figure 5). This decrease corresponds to a new film porosity of 80%.

A further very decisive result was achieved while depositing films with and without annealing, when directly depositing onto a PMMA layer. A PMMA pre-coated substrate (glass and silicon) could be utilized to deposit particles on top and even anneal the film. The PMMA layer shows no or only very little deterioration, when inspected on SEM images. In Figure 5 one can identify the PMMA layer after having withstood particle deposition and annealing. This possibility is most likely due to the sufficient cooling rate of the substrate holder..

### Non annealed polymer nanocomposite:

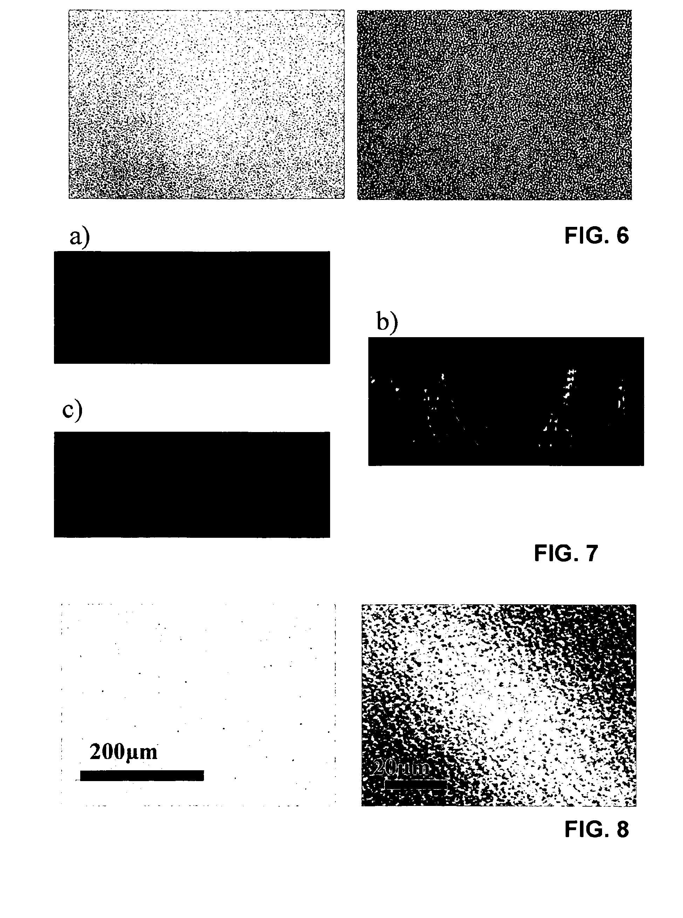

Evaluation of film thickness-time correlation and the desire of creating a composite with a thickness of 3-4µm, gave forth that a depositing time of 30s is appropriate. This was under the assumption that the porosity of 98% is retained. The desired method for creating polymer nanocomposites was to directly spin-coat the particle film. In Figure 6 the influence of spin-coating on the particle distribution in the surface can be seen. Out of the image comparison, one can take that essentially no agglomeration of the particles takes place. Overall a very homogeneous particle film remains embedded in the PMMA matrix. No other publication has so far cited the possibility for embedding an entire particle film. To establish a desired vertical homogeneity the maximum spin-coating speed can be manipulated. By doing so an overall thinner composite film was created when the rotational speed was increased.

The above adjustment reduces the overall composite thickness. In order to increase the overall polymer nanocomposite thickness, the possibility of particle deposition onto a pre-existing PMMA layer can be utilized. By depositing and spin-coating one layer over the other, it was indeed possible to increase the composite thickness. This is visible in the SEM images from Figure 7. The depositing time per particle film was set to 30s and the maximum rotational speed for spin-coating to 4000rpm in images a) and b). Adding additional composite layers can be done to a great extent without interference with pre-existing layers. When comparing the transparency of film b) to a) in Figure 7, it is much darker and opaque having to do with the additional seven layers.

In Figure 7 c) a further possibility for adjusting the composite properties can be seen. Film c) was created by reducing the depositing time per particle film from 30s (as applied in film a)) to 10s. Further parameters were left unchanged. This adjustment reduced the height of the actual particle layer in each composite layer. The void polymer was therefore increased. The overall composite thickness (all three layers) remains unchanged in comparison to a), due to the same rotational speed. The profitability from reducing the depositing time comes from the fact that the particle clusters have a reduced height deviation. Therefore by also increasing the rotational speed it is hypothesized, that the overall particle filling factor per layer increases. The cost of this adjustment is the necessity of more composite layers to reach the desired total thickness.

To evaluate the overall method for nanocomposite production it was in a further step decided on to characterize an average nanocomposite film. The three-layer film with 30s depositing time and 4000 rpm maximum rotational speed seemed for this purpose suitable. In Figure 7 a) the SEM image shows the quasi-homogeneous dispersion of the particles in the vertical axis. Figure 8 shows the truly homogeneous particle distribution in the horizontal plane. The present method has already with this data overcome a major challenge, the high agglomeration tendency, others have faced, when not functionalizing or adding dispersing agents.

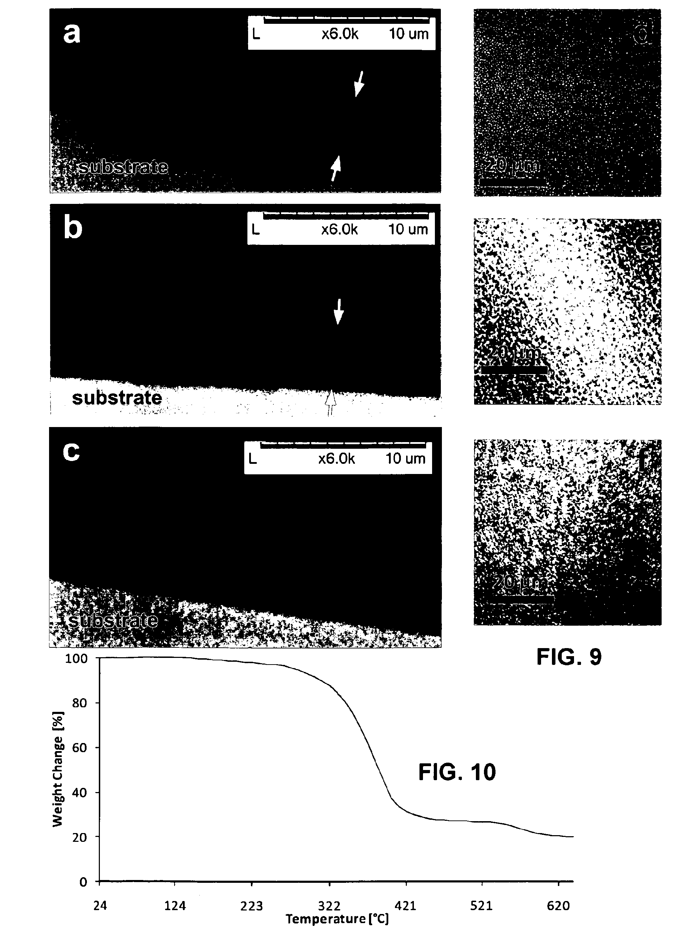

Figure 9a shows a further SEM cross-section image of a 3-layered superparamagnetic nanocomposite. The filler film in this case was not mechanically stabilized by in-situ annealing. The total thickness of this multi-layered film is 4 um and the filler fraction (as determined by TGA) 20 wt%. The filler film thickness uniformity can be further improved by in-situ mechanical stabilization. Figure 9b shows a SEM cross-section image of a single-layer nanocomposite film. The filler film now has a homogeneous thickness over the whole area. The thickness of this film is 3.5 um and the filler fraction is 10 vol%. Several layers were deposited following the above procedure forming the 3-layer nanocomposite film shown in Figure 9c. Furthermore, the filler material is homogeneously distributed on the lateral dimensions. This is verified from optical microscopy images of the nanocomposites in Figure 9 for a 3-layered not-annealed (d), single-layer annealed (e) and 3-layer annealed (f) polymer nanocomposites where no large agglomerates can be detected.

Another comparative value is the filler content. TG analysis, visualized in Figure 10, gave a particle mass fraction of 21.5wt% (5.8vol%). It is to note though that it is one of the highest values yet achieved. The nanocomposite film taken in the present analysis is as stated earlier a general film, which means it has not been optimized. By regulating the number of layers, depositing time and spin-coating speed, the composite film has potential for further optimization.

A further very good comparative aspect, which shows the actual realization of the polymer nanocomposite's functionality, is the magnetization curve shown in Figure 11. It is clearly visible that like the magnetization analysis of the nanoparticle powder, the nanocomposite is superparamagnetic and can theoretically already fulfill its functionality. As expected the saturation magnetization of the composite, 2.65 (emu)/g, is less than the pure particles because of the circa 94vol% of PMMA. The present very competitive value achieved with maghemite nanoparticles is the result of the better particle dispersion throughout the composite film.

This film was stimulated with a magnet, which showed the superparamagnetic behavior more directly. A very sensitive and quick response time was noticed. However the electrostatic forces of an adjacent polymeric surface exceed those of the magnet hindering its stimulation.

Figure 11 thus shows the magnetic performance of a 3-layer film not mechanically stabilized (a) nanocomposite and the single-layer mechanically stabilized one (b). Both nanocomposite films exhibit superparamagnetic behavior, as there is no hysteresis in the magnetization. However, the nanocomposite with the mechanically stable filler film exhibits higher magnetization of 4.3 Am2/kg than the 3-layer film. This value is higher than every other similar nanocomposite structure in the literature, and is attributed to the high (10 vol%) filler content in the polymer.

The results of the non-annealed polymer nanocomposites discussed above may suggest to include annealing. One reason is the particle distribution in the vertical axis. By tuning the production parameters (e.g. depositing time, number of layers, spin-coating speed) it is possible to create a quasi-homogeneous particle dispersion.

Above annealed particle films with a xylenes feeding rate of 6ml/min were evaluated to have not changed their porosity due to the same particle film thickness. Nevertheless the stabilizing effect of annealing could already have taken affect. Spin-coating these lightly annealed particle films resulted in composites as depicted in Figure 12. Not only did the light annealing have little effect on the particle film porosity, but it also hardly increased the films stability necessary for spin-coating.

Annealing with a xylenes flow rate of 12ml/min showed much more promising results. For composites as depicted in Figure 13 particles were deposited for 120s and annealed at 14, 16, 18 or 20 cm above the nozzle for 30s with the higher xylenes feeding rate. The annealed particle film without embedment into a polymer had resulted in a porosity of 80% with these exact conditions. By adjusting the porosity in the film thickness-time correlation to 80%, one can compute the theoretical annealed film thickness. At 120s this value would correspond to 1.60µm. Measuring exclusively the embedded particle film thickness in the SEM images of the polymer nanocomposites such as the one depicted in Figure 13 show a very good correlation to this value. At 20cm annealing height, a thickness of 1.7µm could be measured. This shows that the annealed film is not further compacted by spin-coating and that the earlier calculated 80% porosity can be assumed as a good estimate for these annealing conditions. The goal of annealing by applying these conditions was therefore reached: The particle distribution in the vertical axis is homogeneously distributed throughout the whole polymer nanocomposite.

As in the case of non annealed polymer nanocomposites, the possibility of assembling multiple layers of annealed composite films was investigated. From Figure 14 one can see that it is an option to create such layered structures. Unlike in the unannealed case though, the lower lying layers may show slight deformation. This deformation is thought to be because the higher annealing temperature causing the PMMA to become viscose.

To get a general overview what properties can be expected from a single layer annealed nanocomposite, similar measurements, as applied for the 3-layer non-annealed nanocomposite, were done. The film utilized for the further analysis is depicted in Figure 13. TG analysis resulted in a particle mass fraction of 23.53wt% (6.5vol%). One would expect this value to be higher when relating it to the mass fraction achieved for the 3-layer non-annealed composite (=21.5wt%). Nevertheless this is possible because of the excess void polymer above and below the particle film. It contributes to about half of the total film thickness.

The particles remaining after TGA were used for XRD measurements. Figure 2 spectrum e) shows the results correlating with maghemite and the prior calculated particle size. Due to the similar particle size one can assume that annealing had no strong agglomeration effect.

Analysis of the magnetization curve shows that also this polymer nanocomposite reveals the desired superparamagnetic behavior. A higher saturation magnetization value of 4.4 (emu)/g, than what the 3-layer non-annealed composite revealed (=2.65(emu)/g), can be measured. The mass fraction only increased insignificantly, which shows that the magnetization is not linearly correlated with the particle filling ratio. If in fact the particle size had slightly increased during annealing as the XRD results showed, then this might also have an effect on the increase in saturation magnetization.

Further theoretical analysis of this annealed nanocomposite was done, by calculating the highest achievable particle filling ratio. When assuming an annealed particle film porosity of 80% and reducing the in present reality upper and lower void PMMA, one could achieve a particle mass fraction of 52.6wt%. A value in this range has never been achieved in published literature for superparamagnetic polymer nanocomposite films.

An even further increase of the filler ratio and therefore magnetization can be realized, when adjusting the annealing conditions even more. When creating a particle film with 62% porosity, it is possible to create a polymer nanocomposite with 73wt% particles. Furthermore, a potential option for increasing the films magnetization functionality is to slightly increase the deposited particle sizes.

### Solvent-melt blended polymer nanocomposite (comparative results):

The creation of solvent-melt blended polymer nanocomposites revealed difficulty. The first attempts were made without a surfactant. Even for very low concentrations of maghemite nanoparticles, it wasn't possible to disperse them in anisole by sonication. With the surfactant MEMO a nice dispersion was achieved in the solution with 10wt% particles in respect to the PMMA content. The 15wt% still showed some agglomeration. Viewing the spin-coated films by light microscope and comparing them to the films produced with the here developed methods, shows their inferiority. The solvent-melt blended composite film with 15wt% particles shows an extremely high agglomeration tendency, which makes it inapplicable for nano-scale structures. The 10wt% composite film also shows agglomeration, but possibly acceptable for further use. Its SEM image of the vertical plane shows results comparable to the 3-layer non-annealed polymer nanocomposite characterized in section 3.3. Due to its lower filler ratio though, this film is nevertheless inferior.

When the above films are made on a sacrificial layer, the latter can be easily removed, resulting in free-standing of a few microns thin structures with macro-scale lateral dimensions. Such a film is presented in Figure 15, where a polymer nanocomposite of 4 um thickness is at rest (a) and actuated by the presence of a permanent magnet (b). Such structures are ideal for microfabrication techniques of cantilevers.

### Summary:

A scalable flame aerosol technology is porposed here to produce high-filler-content polymer nanocomposites with a uniquely homogeneous dispersion within the polymer film. This is achieved by depositing a filler film on a substrate by aerosol deposition and optionally mechanically stabilizing it by in-situ annealing. The polymer solution is then coated, e.g. spin-coated, on the filler film. A precise control over the filler fraction and the total film thickness can be obtained by tuning the process parameters. The synthesis of multi-layered nanocomposite films is demonstrated by repeating the process numerous times. Specifically the detailed section proposes a new method for the production of superparamagnetic polymer nanocomposites consisting of poly(methyl methacrylate) (PMMA) and maghemite (γ-Fe2O3). The basic specific production steps involve a direct deposition of nanoparticles by flame-spray pyrolysis (FSP) onto a water cooled substrate and therefore forming a particle film of 98% porosity. Spin-coating the particle film with a polymer solution such as a PMMA solution thereafter directly embeds the particles into a polymer matrix. Such films have a high degree of homogeneous dispersion in the films horizontal plane. Analysis of the vertical plane showed compaction of the particle film and therefore forming a particle void layer of PMMA on top of an actual nanocomposite. Adjusting the deposition time, spin-coating speed and depositing multiple nanocomposite layers on top of each other allows for the creation of a quasi-homogeneous particle distribution in the film thickness. Adding an in-situ flame annealing step between particle deposition and spin-coating mechanically stabilizes the film and reduces its porosity to 80%. The particle film retains its thickness during the spin-coating.

A 3µm thick polymer nanocomposite created by this technique, which still can be optimized, attains mostly superior properties in comparison to previously published literature. It is for example superparamagnetic with a saturation magnetization of 4.4 (emu)/g at room temperature. The particle filler ratio was measured to be 23.5wt% (6.5vol%). Optimizing this film allows one to increase the filler ratio to 52wt% (20vol%), which increases the saturation magnetization value.

In addition to the optimistic characteristics, which films produced by this technique reveal, all steps are scalable to a fast, reliable and reproducible industrial production. Superparamagnetic polymer nanocomposite films with such fabrication conditions are prone to be applied in future sensor, actuator and further electro and micro-engineering technologies.

Even though here this was realized for superparamagnetic polymer (PMMA) nanocomposited with unprecedented maximum magnetization (4.3 Am2/kg) and high-filler-contents (10 vol%), this process is not limited to these materials. Filler particles can be any material that can be aerosolized, including nanophosphors for luminescent polymer nanocomposites, high-dielectric-constant materials for dielectrics, plasmonic materials for dichroic films, UV absorbing fillers to name a few. Additionally, the polymer chosen is not limited to PMMA as used here, but expands to most thermoplasts, silicones, polyethylene etc.

### LIST OF REFERENCE SIGNS

- 1: substrate
- 2: particle film
- 3: flame generated particles
- 4: flame

- 5: polymer solution
- 6: spin coating rotation axis
- 7: composite film

## Claims

1. Method for the production of at least one composite layer (7) in which nanoparticles are embedded in a polymer matrix, comprising the following steps:
1. in situ production and aerosol deposition of nano-particles onto a substrate (1) for the formation of a particle film (2) on the second substrate (1);
2. immersing said particle film (2) with a polymer solution or a liquid polymer precursor material for the formation of the composite layer (7).

2. Method according to claim 1, wherein in step 1 aerosol technology, preferably flame spray pyrolysis, is used for the generation of the nano-particles and wherein the substrate (1) is placed in the flow path of the flame (4), preferably at a distance in the range of 10-30 cm, preferably in the range of 15-25 cm, for the formation of the particle film (2), and wherein step 1 is carried out for a timespan in the range of 5-150 seconds, preferably in the range of 30-120 seconds.

3. Method according to any of the preceding claims, wherein between step 1. and step 2. an annealing step is carried out, preferably by subjecting the particle film (2) to an elevated temperature, in particular by subjecting it to a flame treatment, preferably during a timespan of 5-120 seconds, preferably in the range of 20-40 seconds.

4. Method according to any of the preceding claims, wherein prior to step 1. a polymer layer is applied to the free surface of the substrate, preferably in a spin coating process using a polymer solution or a liquid polymer precursor material.

5. Method according to any of the preceding claims, wherein in step 2. The polymer solution is applied in a coating process selected from the group of spin coating, cast coating, slot coating, spray coating, dip coating, preferably it is applied using spin coating.

6. Method according to any of the preceding claims, wherein using a mask spatially between the source (4) of nanoparticles and the surface of the substrate the generation of the particle film (2) is limited to specific areas or a pattern.

7. Method according to any of the preceding claims, wherein during step 1. The substrate is oriented such that the surface onto which the particle film (2) is to be deposited is oriented essentially horizontally and downwards, and wherein during step 2 the substrate is oriented such that the surface onto which the polymer solution or polymer precursor material is to be applied onto the particle film (2) is oriented essentially horizontally and upwards.

8. Method according to any of the preceding claims, wherein steps 1. and 2. are repeated at least once for the formation of a multilayer composite layer (7) wherein preferably the steps are repeated at least twice or three times.

9. Method according to any of the preceding claims, wherein during step 1. the substrate (1) and/or a substrate holder holding the substrate is cooled, preferably watercooled, and/or wherein the substrate (1) is an inorganic or polymeric substrate (1) or a combination thereof, preferably a coated or uncoated substrate based on a material selected from the group: glass, ceramic, silica, polymer, reinforced polymer, and combinations thereof.

10. Method according to any of the preceding claims, wherein after steps 1. and 2., preferably repeated at least once for the formation of a multilayer composite layer (7), wherein preferably the steps are repeated at least twice or three times, the composite layer (7) is removed from the substrate.

11. Method according to any of the preceding claims, wherein the nanoparticles have an average size in the range of 1-100 nm, preferably in the range of 3-50 nm, and wherein preferably the nanoparticles are selected from the group consisting of: silica particles, preferably fumed silica particles, titania particles, carbon black particles, silver particles, gold particles, magnetically active particles, superparamagnetic active particles, in particular superparamagnetic iron oxide particles, optically active particles, electro-optically active particles, dielectric particles, thermally conductive particles, or combinations or coated particles thereof

12. Composite layer (7), preferably multilayer composite layer, made or obtainable using a method according to any of the preceding claims.

13. Composite layer (7) according to claim 12, with an individual layer thickness of less than 2 µm, preferably less than 1 µm, preferably in the range of 50-100 nm or, in case of a multilayer composite layer a corresponding multiple thereof, preferably in the form of a coating structure on a substrate (1), preferably an inorganic or polymeric substrate (1), or in the form of a self-supporting structure, preferably as a cantilever.

14. Composite layer (7) according to claim 12 and 13, with a content of nanoparticles in the range of 5-60 volume percent, preferably in the range of 8-40 volume percent, particularly preferably in the range of 10-25 volume percent.

15. Use of a composite layer (7) according to claim 12, as an antireflective element, as a limited gas permeability element, as a superparamagnetic element, as a dielectric element, as an anti-septic element, as an anti-fogging element, as a hydrophobic element, as a hydrophilic element, as a medical element, as an optical element, as it in any element.
